# EUROPEAN PATENT APPLICATION

(11) **EP 2 475 167 A1**
(43) Date of publication of application: **11.07.2012**
(21) Application number: 11192678.8
(22) Date of filing: 08.12.2011
(51) Int. Cl.: H04N 5/445, H04N 21/482, H04N 21/84

(54) **Method for displaying video and broadcast receiving apparatus applying the same**

(30) Priority: 10.01.2011 KR 20110002479
(71) Applicant: Samsung Electronics Co., Ltd., Suwon-si, Gyeonggi-do 442-742 (KR)
(72) Inventor: Yoon, Yeo-ri, Gyeonggi-do (KR); Kim, Yoo-tai, Gyeonggi-do (KR); Cho, Bong-hyun, Gyeonggi-do (KR); Lee, Chang-soo, Seoul (KR); Lee, Sang-hee, Seoul (KR); Kim, Jong-seo, Seoul (KR); Yoon, Soo-yeoun, Seoul (KR); Shin, Jung-hoon, Gyeonggi-do (KR)
(74) Representative: Robinson, Ian Michael

(57) **Abstract**

A method for displaying video and a broadcast receiving apparatus applying the same. The broadcast receiving apparatus includes an output unit which outputs a user interface window containing a plurality of groups having at least one broadcast channel, an input unit which receives a zapping command, a receiving unit which is tuned to a broadcast channel and receives a broadcast signal, and a control unit which controls the receiving unit, if one from among the plurality of groups categorized according to at least one criterion of categorization is selected and the zapping command is inputted, so that the receiving unit is tuned to the broadcast channels belonging to the selected group in sequence.

## Description

### CROSS-REFERENCE TO RELATED APPLICATION

This application claims priority from Korean Patent Application No. 10-2011-0002479, filed on January 10, 2011, in the Korean Intellectual Property Office.

### BACKGROUND

### 1. Field of the Invention

Methods and apparatuses consistent with exemplary embodiments relate to a method for displaying video and a broadcast receiving apparatus applying the same, and more particularly, to a method for displaying video which categorizes channels corresponding to a broadcast signal into a plurality of groups based on broadcast information and additional information, and outputting the channels, and a broadcast receiving apparatus applying the same.

### 2. Description of the Related Art

The recent advancement of a variety of multimedia devices has enabled viewers to access a variety of broadcasts almost anytime and anywhere without a limit. Along with this, various content has been developed for distribution via broadcast channels, and the number of broadcast channels has also increased for use by the viewers to access such contents.

Generally, users change a channel in various ways. The sequential search, by which the user changes channels with a channel up/down command, would be the most-frequently used way to change a channel. That is, the user himself changes a channel in order, checks a current program and selects a channel as he wants.

However, due to the recent increase in the number of broadcast channels, this way of sequential search can be time-consuming for a user, since the user has to keep searching until he finally finds the intended program. Accordingly, a method is necessary, with which the user can easily select a desired broadcast program using a specific categorization.

### SUMMARY

According to the present invention there is provided an apparatus and method as set forth in the appended claims. Other features of the invention will be apparent from the dependent claims, and the description which follows. One or more exemplary embodiments overcome the above disadvantages and other disadvantages not described above. However, exemplary embodiments are not required to overcome the disadvantages described above, and an exemplary embodiment may not overcome any of the problems described above.

According to one exemplary embodiment, a method for displaying an image is provided, which categorizes broadcast channels into a plurality of groups based on broadcast information or additional information, and tunes to and displays broadcast of the broadcast channels of a selected group in sequence in response to selection of one group from among the plurality of broadcast channel groups, and a broadcast receiving apparatus applying the same.

In one exemplary embodiment, a broadcast receiving apparatus is provided, which may include an output unit which outputs a user interface window containing a plurality of groups having at least one broadcast channel, an input unit which receives a zapping command, a receiving unit which is tuned to a broadcast channel and receives a broadcast signal, and a control unit which controls the receiving unit, if one from among the plurality of groups categorized according to at least one criterion of categorization is selected and the zapping command is inputted, so that the receiving unit is tuned to the broadcast channels belonging to the selected group in sequence.

The control unit may set genre information contained in broadcast information as the criterion of categorization and categorize a separate group.

The genre may include at least one of news, movies, dramas, varieties, sports, education, entertainments, and religion.

The control unit may control so that a user interface window is displayed to select the criterion of categorization based on at least one of character, theme, place and time of a broadcast program corresponding to a broadcast channel selected by a user.

The control unit may extract at least one metadata corresponding to the selected criterion of categorization and categorize channels related to the extracted metadata under one group.

The control unit may control so that a user interface window containing information about a number of the channels related to the extracted metadata is displayed.

The control unit may set the criterion of categorization based on at least one of metadata, preference information and recommended channel information contained in broadcast information, and categorize a separate group based on the set criterion of categorization.

The metadata may correspond to information related to at least one of character, theme, place and time related to a broadcast program corresponding to a broadcast channel selected by a user.

The broadcast information may be received via a broadcast signal or an external server.

The control unit may control the output unit, if the zapping command is consecutively inputted for more than a preset number of times, so that the output unit outputs the user interface window.

In one exemplary embodiment, a method for displaying video is provided, which may include outputting a user interface window containing a plurality of groups having at least one broadcast channel, receiving a zapping command, and if one from among the plurality of groups categorized according to at least one criterion of categorization is selected and the zapping command is inputted, being tuned to the broadcast channels belonging to the selected group in sequence.

The method may additionally include setting genre information contained in broadcast information as the criterion of categorization and categorizing a separate group.

The genre may include at least one of news, movies, dramas, varieties, sports, education, entertainments, and religion.

The outputting may include displaying a user interface window to select the criterion of categorization based on at least one of character, theme, place and time of a broadcast program corresponding to a broadcast channel selected by a user.

The categorizing may include extracting at least one metadata corresponding to the selected criterion of categorization and categorizing channels related to the extracted metadata under one group.

The outputting may include displaying a user interface window which contains information about a number of the channels related to the extracted metadata.

The method may additionally include setting the criterion of categorization based on at least one of metadata, preference information and recommended channel information contained in broadcast information, and categorizing a separate group based on the set criterion of categorization.

The metadata may correspond to information related to at least one of character, theme, place and time related to a broadcast program corresponding to a broadcast channel selected by a user.

The broadcast information may be received via a broadcast signal or an external server.

If the zapping command is consecutively inputted for more than a preset number of times, the outputting may include outputting the user interface window.

In another exemplary embodiment, there is provided a broadcast receiving apparatus, including: an on-screen display which displays a user interface window containing a plurality of groups having at least one broadcast channel; a receiving unit which is tuned to a broadcast channel and receives a broadcast signal; and a control unit which controls the receiving unit, if one from among the plurality of groups categorized according to at least one criterion of categorization is selected, so that the receiving unit is tuned to the broadcast channels belonging to the selected group in sequence.

Yet another exemplary embodiments provides a method for displaying video. The method includes: outputting a user interface window containing a plurality of groups having at least one broadcast channel; and if one from among the plurality of groups categorized according to at least one criterion of categorization is selected, tuning to the broadcast channels belonging to the selected group in sequence

In various exemplary embodiments of the method for displaying video and a broadcast receiving apparatus, the broadcast channels are categorized under a plurality of groups based on broadcast information or additional information, and if one from among the plurality of groups is selected, the broadcast channels belonging to the selected group are tuned and displayed in sequence. As a result, users are able to select intended channel more easily and within a shortened time.

In particular, since the broadcast channels are categorized using criteria of categorization based on various information contained in the metadata of the broadcast content, users are able to view only the channels containing the intended information in sequence.

### BRIEF DESCRIPTION OF THE DRAWINGS

The above and/or other aspects will be more apparent by describing certain exemplary embodiments with reference to the accompanying drawings, in which:

FIG. 1 is a block diagram of a broadcast receiving apparatus according to an exemplary embodiment;

FIGS. 2A and 2B are views provided to explain a process of entering a zapping mode according to an exemplary embodiment;

FIGS. 3A to 3F are views provided to explain an operation of changing a channel in the zapping mode, according to an exemplary embodiment;

FIGS. 4A to 4D are views provided to explain an operation of adding a menu which is categorized using different criteria of categorization to a select menu which is generated based on preset criteria of categorization in zapping mode, according to an exemplary embodiment; and

FIG. 5 is a flowchart provided to explain a method for displaying video according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements, even in different drawings. The matters defined in the description, such as detailed construction and elements, are provided to assist in a comprehensive understanding of the exemplary embodiments. Accordingly, it is apparent that the exemplary embodiments can be carried out without those specifically defined matters. Also, well-known functions or constructions are not described in detail since they would obscure the detailed description with unnecessary detail.

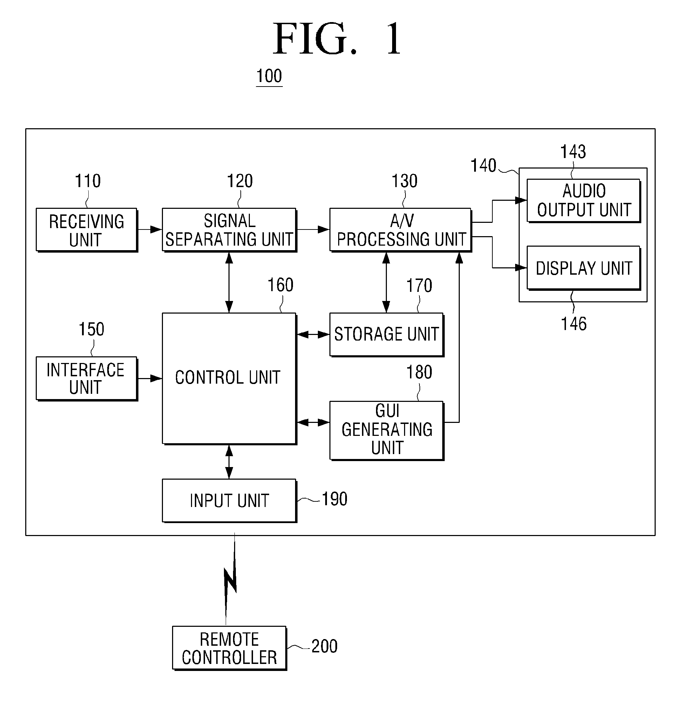

FIG. 1 is a detailed block diagram of a broadcast receiving apparatus according to an exemplary embodiment. The broadcast receiving apparatus 100 according to an exemplary embodiment may perform a function of dividing broadcast channels into a plurality of groups based on broadcast information or additional information, and if one from among the plurality of channel groups is selected, being tuned to and displaying the broadcast channels of the selected channel group in sequence.

The 'broadcast information' may include EPG information and also refer to all the information related to broadcast program. Accordingly, the broadcast information may include information about genre, running time, time to start and end the broadcast program, or metadata regarding the broadcast program. The broadcast information may be received via a broadcast signal or from an external server.

Referring to FIG. 1, the broadcast receiving apparatus 100 may include a receiving unit 110, a signal separating unit 120, an A/V processing unit 130, an output unit 140, an interface unit 150, a control unit 160, a storage unit 170, a GUI generating unit 180, and an input unit 190.

The broadcast receiving apparatus 100 may be implemented as a digital television (TV) to receive and output a broadcast signal. However, the broadcast receiving apparatus 100 is not limited to the specific example, and accordingly, is applicable to any device that is capable of receiving a broadcast signal. For example, the broadcast receiving apparatus 100 may be implemented as mobile phone, PMP, MP3, or PC.

The receiving unit 110 receives a broadcast from a broadcast station or satellite by wired or wireless manner and demodulates the received broadcast. To be specific, the receiving unit 110 may be implemented as at least one tuner. Depending on needs, the receiving unit 110 may include a plurality of tuners to receive broadcast signal via a plurality of channels.

The signal separating unit 120 separates a broadcast signal into video signal, audio signal, and broadcast information. The signal separating unit 120 also transmits the video and audio signal to the A/V processing unit 130, and transmits the broadcast information to the storage unit 170, the control unit 160 and the GUI generating unit 180.

The A/V processing unit 130 performs signal processing including video decoding, video scaling, or audio decoding with respect to the video and audio signals inputted from the signal separating unit 120 and the interface unit 150. Further, the A/V processing unit 130 outputs the video signal to the display unit 146 and outputs the audio signal to the audio output unit 143.

On the other hand, if video signal and audio signal are stored at the storage unit 170 or transmitted to an external device via the interface unit 150, the A/V processing unit 130 may output the video and audio signal in compressed form to the storage unit 170 or the interface unit 150.

The output unit 140 includes the audio output unit 143 and the display unit 146.

The audio output unit 143 may output audio outputted from the A/V processing unit 130 through a speaker, or to an external device (e.g., external speaker) connected via an external output terminal.

The display unit 146 may either display the video outputted from the A/V processing unit 130 on a display or output the output video to an external device (e.g., external display) connected via an external output terminal.

Further, the display unit 146 may display the menus generated at the GUI generating unit 180 on a screen.

To be specific, the display unit 146 may display a user interface window which includes a plurality of groups having at least one broadcast channel.

Further, the display unit 146 may display a user interface window which presents the broadcast channel information including an on-screen display (OSD) menu to set criteria to categorize the broadcast channels into a plurality of channel groups, and number of the broadcast channels categorized according to the criteria to categorize the broadcast channels, or titles or designated numbers of the broadcast channels. Further, the display unit 146 may display the user interface window including a plurality of groups having at least one broadcast channel.

The interface unit 150 may connect the broadcast receiving apparatus 100 to a communication network including the internet or to various other image devices to receive information about various broadcast programs from the external server.

To be specific, the interface unit 150 may receive not only broadcast information, but also other information such as information on recommended channels including the information on the broadcast channels with popularities ranked high at various internet sites, information about broadcast channels that marked high viewer ratings, or information about broadcast channels recommended by the broadcast service providers.

The storage unit 170 stores a variety of information about broadcast programs. To be specific, the storage unit 170 may store the broadcast information, preferred channel information and recommended channel information. The 'preferred channel information' herein refers to information about the channels preferred by the viewer, and may be set by a user's bookmark command with respect to the corresponding channels and stored.

The GUI generating unit 180 may generate a GUI to be displayed on the screen and adds the generated GUI to the video outputted from the A/V processing unit 130.

To be specific, the GUI generating unit 180 may generate a GUI including an OSD menu to set the criterion to categorize the broadcast channels into groups, and generate a GUI to present broadcast channel information including the number of broadcast channels categorized according to the criteria of categorization, and titles and designated numbers of the broadcast channels. Further, the GUI generating unit 180 may generate a GUI to construct a user interface window including the plurality of groups having at least one broadcast channel.

The input unit 190 operates to receive a user manipulation (e.g., zapping command), and may be implemented as an operating panel that includes a number button, a channel search button (channel up/down buttons), and audio volume adjusting button, or as a remote control receiving unit to receive an operation of an external remote controller 200.

The input unit 190 transmits the inputted user manipulation to the control unit 160.

The control unit 160 analyzes the user command based on the manipulation of the user as transmitted from the input unit 190 and controls the overall operation of the respective constituents of the broadcast receiving apparatus 100 according to the user command as analyzed.

The control unit 160 may categorize the broadcast channels into a plurality of groups based on at least one criterion of categorization. To be specific, the control unit 160 may categorize the tunable channels into a plurality of channel groups based on the criteria of categorization including broadcast information or additional information.

The 'broadcast information' herein corresponds to the criteria to categorize the channels according to the characteristics of the broadcast programs. For example, the broadcast information may include information about genre, running time, starting and ending time, and metadata of the broadcast program.

The genre information may include sub-items including at least one of news, movies, dramas, varieties, sports, education, entertainment, religion, information and culture.

The metadata about the broadcast program may include at least one of a character related to a corresponding broadcast program (e.g., actor/actress), director, theme, place (e.g., place of shooting), or time (e.g., time of shooting).

Further, the additional information may correspond to the criteria other than the broadcast information which is applicable to categorize the broadcast program. For example, the additional information may include preferred channel information and recommended channel information. As explained above, the preferred channel information may correspond to information about the channel preferred by the user, and the recommended channel information may correspond to broadcast channel information recommended by the broadcast service providers, broadcast channel information with popularity ranked high at various internet sites, and information about the broadcast channel that marked high viewer ratings.

By way of example, if the broadcast channels are categorized into a plurality of channel groups based on the genre information applied as a criterion, the control unit 160 may categorize the tunable broadcast programs into programs related to sub-items including news, movies, dramas, varieties, sports, education, entertainment, religion, information and culture, and group the channels providing the programs under same category into same channel group. That is, the control unit 160 may categorize the channels providing sports programs under same group, and categorize the channels providing movie programs under same group.

In an additional example, if the broadcast channels are categorized based on the metadata applied as criterion, the control unit 160 may categorize the currently-tunable channels based on the character, director, theme, place and time of shooting related to the broadcast programs currently outputted through the output unit.

To be specific, the control unit 160 may categorize the channels providing all the tunable programs featuring related actors/actresses of a program currently outputted through the output unit 140 under 'character' group, and categorize the channels providing all the tunable programs made by the same director of a program currently outputted through the output unit 140 under 'director' group. Likewise, the control unit 160 may categorize the channels providing all the tunable programs featuring the same theme as a program currently outputted through the output unit 140 under 'theme' group, categorize the channels providing all the tunable programs made at the same place (or location) as a program currently outputted through the output unit 140 under 'place' group, or categorize the channels providing all the tunable programs made at the same time period as a program currently outputted through the output unit 140 under 'time' group.

Further, the control unit 160 may control the output unit 140 to output a user interface window through which the broadcast information or additional information are selected as the criteria of categorization. Accordingly, in response to a user command to select the criterion of categorization, the control unit 160 categorizes the broadcast channels into a plurality of groups according to the criterion of categorization as inputted.

In one example, the control unit 160 may categorize the broadcast channels into a plurality of groups without requiring input of a user command to set the criterion of categorization, in which case the control unit 160 applies a preset default value. In other words, the criteria of categorization are selectable by the user.

Meanwhile, in addition to the way of using broadcast information and additional information as the criteria to categorize the broadcast channels into a plurality of groups, other methods are implementable.

The typical way for viewers to search a desired channel is to consecutively change the broadcast channels. However, this consumes a considerable amount of time since the viewer has to change channels until he finally finds the intended channel.

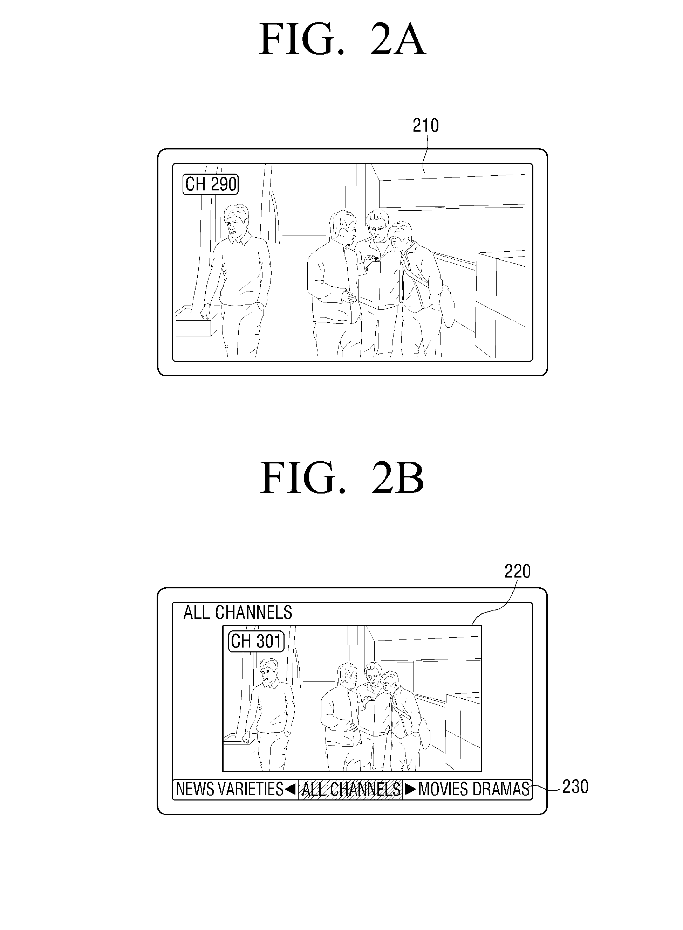

Accordingly, in one exemplary embodiment, the control unit 160 may control the output unit 140 to output a user interface window including a select menu to enable selection of each of the categorized groups, in response to more than a predetermined number of consecutive inputs of zapping command made by a user. Further, if the user selects one from among the plurality of channel groups and inputs the zapping command, the control unit 160 controls the receiving unit 110 to tune to the broadcast channels of the selected channel group in sequence. The related example is illustrated in FIGS. 2A to 4E.

The 'zapping command' herein refers to the channel up/down command by the user to search channels, and the 'zapping mode' refers to a mode on which the user interface window including select menu to select the categorized groups is presented.

By way of example, it is assumed that the broadcast channels are categorized into a plurality of groups based on the genre applied as a criterion of categorization. In this example, the control unit 160 controls so that the channels corresponding to the tunable broadcast programs are categorized according to sub-items of the genre criterion and displayed. To be specific, the control unit 160 may categorize the tunable broadcast programs into news, movies, dramas, varieties, sports, education, entertainment, religion, information and culture program groups and displays a select menu to select the respective program groups. After that, is a user selects 'movie' group and inputs the zapping command within the selected 'movie' group, the control unit 160 tunes to only the broadcast channels belonging to the 'movie' group.

Accordingly, the range of changeable channels in response to the zapping operation is changed from the entire channels to only the channels ('movie' channels in the above example) belonging to the group categorized according to the criterion of categorization.

Since the broadcast receiving apparatus 100 newly updates the changeable channel range to only the broadcast channels categorized by the specific criterion of categorization, the user is able to select and view intended channel more easily with less zapping operations.

Likewise, since the channels can be categorized based on the information contained in the metadata regarding a broadcast program, the user is able to view only the channels featuring the intended information in sequence.

In one example, it is assumed that the broadcast channels are categorized based on the 'character' information of the metadata. The control unit 160 categorizes the channels of all the tunable programs which feature the actor/actress related to the broadcast program currently outputted through the output unit 140 under one group, and displays a select menu to select the corresponding group. In this example, if a plurality of actors/actresses appear on the broadcast program currently outputted through the output unit 140, the control unit 160 categorizes the channels of the all the tunable programs under separate actor/actress groups, respectively, and displays a select menu to select the respective groups. After that, if the user inputs a zapping command, the control unit 160 changes only within the channels belonging to the specific group, i.e., within the group of the channels featuring a specific actor/actress.

The 'predetermined number of consecutive inputs of zapping command' in the examples explained above may be nine (9) times according to viewing pattern of general viewers. However, the above example is written only for illustrative purpose, and accordingly, the predetermined number of consecutive inputs of zapping command may be selected by the user to be greater than or less than nine times.

Further, in the above-explained exemplary embodiments, although the zapping mode is entered in response to more than the predetermined number of consecutive inputs of zapping command, this is also written for illustrative purpose. In an alternative example, the zapping mode may be entered when a sensor unit (not illustrated) provided on the broadcast receiving apparatus 100 perceives a gesture operation of the remote controller, or the user inputs a shortkey directing to enter the zapping mode.

Further, in the exemplary embodiments explained above, although the criteria of categorization are based on genre information and character information included in the metadata, this is written only for convenience of explanation. Accordingly, the same method is implementable to examples where other information of the broadcast information and additional information is set as the criteria of categorization.

Further, the control unit 160 may control so that a user interface window appears to enable the user to select the criteria of categorization based on at least one of the character, theme, place and time related to the broadcast program corresponding to the broadcast channel selected by the user.

Further, the control unit 160 may extract at least one metadata corresponding to the selected criteria of categorization, and categorize the cannels related to the extracted metadata under one group.

Further, the control unit 160 may add to the select menu generated according to preset criteria of categorization with the menus categorized according to criteria of categorization different from the preset criteria of categorization.

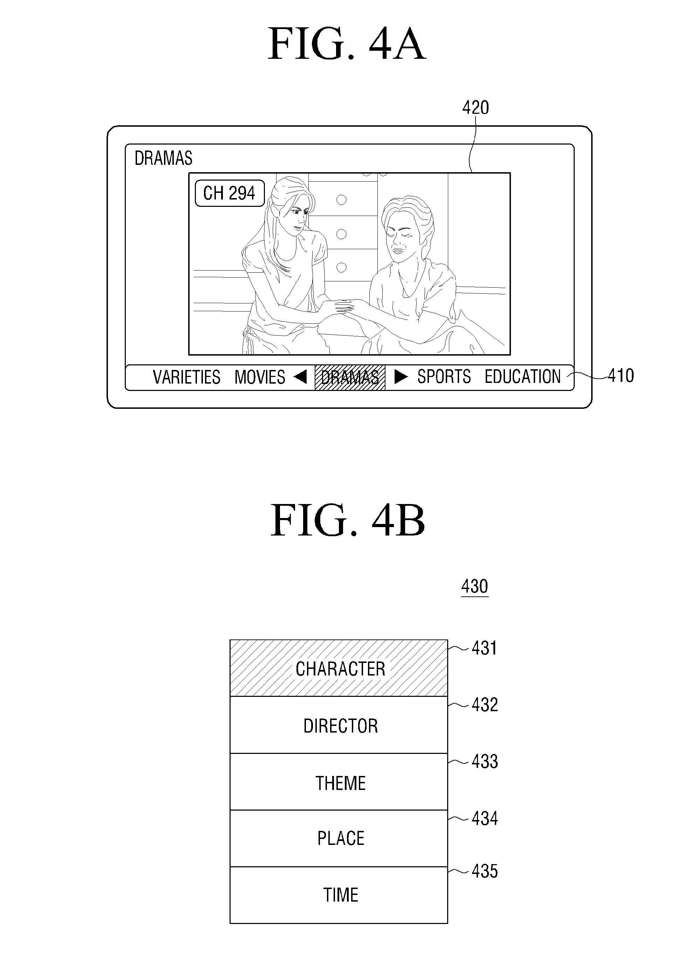

To be specific, if a menu to directly set the criterion of categorization is selected in a state that the broadcast program is outputted through the output unit 140, the control unit 160 may display information contained in the metadata regarding the broadcast program. If one of the information contained in the metadata is selected, the control unit 160 may then categorize the groups according to criteria additionally including the selected information, and display the user interface window presenting the number of broadcast channels belonging to the categorized groups, and titles and designated channel numbers of the broadcast channels. After that, the control unit 160 may add the categorized menu to the previously-generated select menu. This will be explained in greater detail below with reference to FIGS. 4A to 4D.

FIGS. 2A and 2B are views provided to explain the process of entering the zapping mode, according to an exemplary embodiment. Referring to FIG. 2A, the broadcast receiving apparatus 100 tunes to 'ch 290' 210 and outputs the broadcast signal. If the user inputs the predetermined number of zapping commands, referring to FIG. 2B, the broadcast receiving apparatus 100 enters the zapping mode. To be specific, in the zapping mode, the user interface window 220, presenting therein select menu 230 for news, varieties, all the channels, movies an dramas, is outputted.

In the exemplary embodiment explained above, the genre information may be set as default criterion of categorization of the broadcast programs. However, this is only an example. Accordingly, in another example, the control unit 160 may output a user interface window to set the criteria of categorization according to the user command, may apply the criterion of categorization selected by the user and may display the select menu generated as a result.

Further, in the zapping mode, the select menu 230 may be outputted at the bottom end of the user interface window 220. However, this is written only for convenience of explanation. Accordingly, the select menu may be outputted at different regions, including, for example, middle or upper portion of the user interface window, and the user interface window may not be reduced, but maintain the original size.

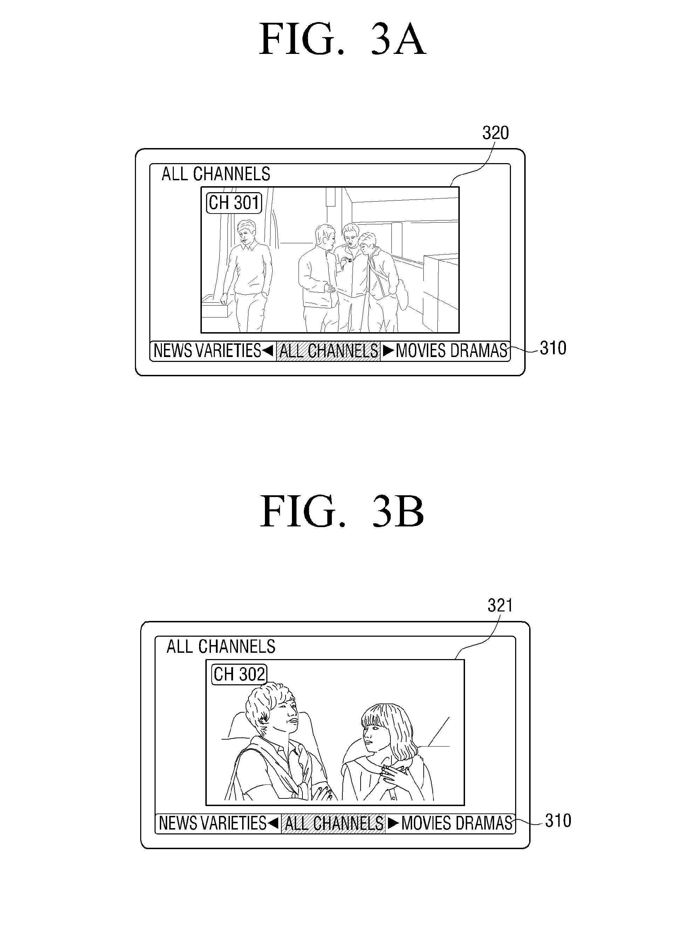

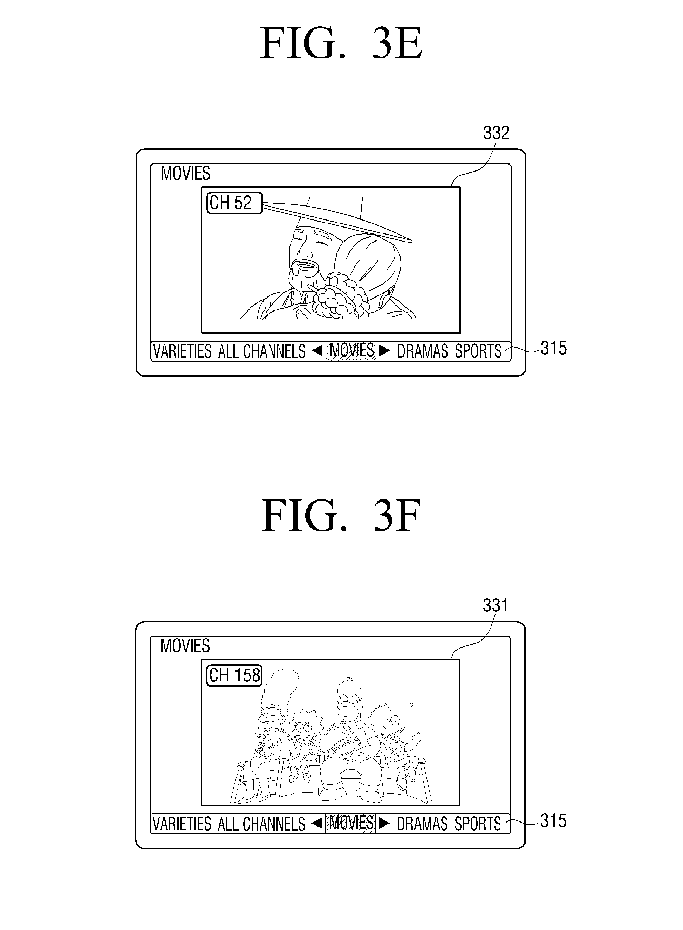

FIGS. 3A to 3F are views provided to explain the operation of changing a channel in zapping mode, according to an exemplary embodiment.

Referring to FIGS. 3A to 3C, 'all channels' item is selected from the select menu 310 presenting news, varieties, al channels, movies, and dramas. In this example, the user may change the currently-viewed channel 'CH 301' 320 to the next channel 'CH 302' 321 or the previous channel 'CH 300' 322 using channel up/down zapping operation.

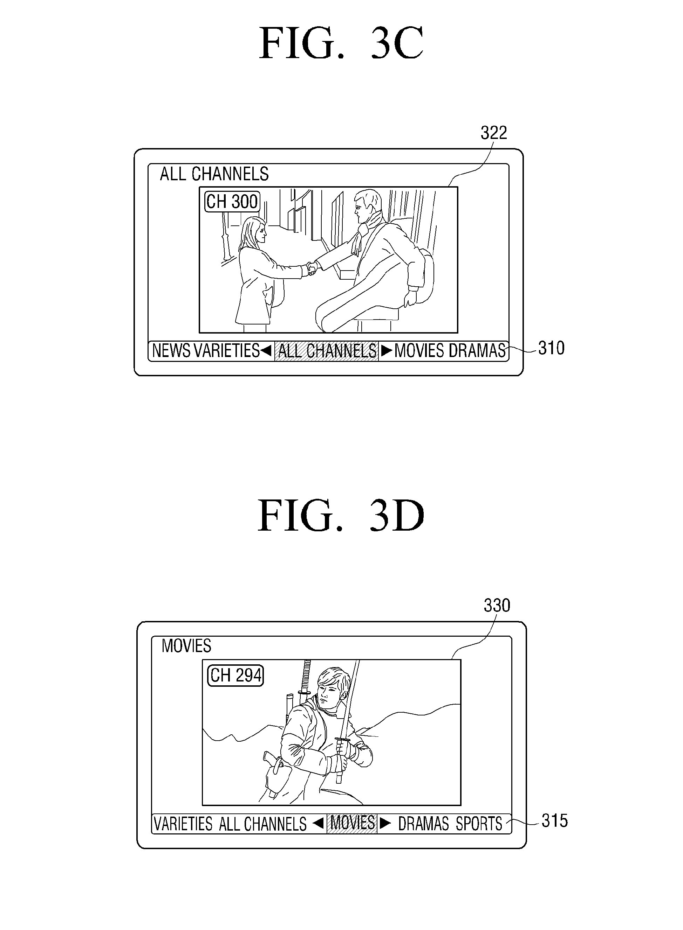

Referring to FIGS. 3D to 3F, the user selects the 'movies' group from the select menu 315 using a select button provided on the input unit 190 or the remote controller 200. In this example, since only the broadcast channels belonging to the 'movies' group are tuned by the channel up/down zapping operation, the user views only the channels broadcasting the programs related to the movies. That is, in response to the selection of the 'movies' group, the 'CH 294' 330 broadcasting movie-related programs is tuned, and then followed by 'CH 158' 331 and 'CH 52' 332 categorized under the 'movie' group.

The first movie-related broadcast channel tuned in response to the selection of the 'movie' group may be preset by the user or the closest channel to the channel which has been used before the 'movie' group is selected. For example, if the user selects the 'movies' group while watching 'CH 300' 322 (FIG. 3C), 'CH 294' 330 which is closest to 'CH 300' 322 may be selected from among the channels under the movies group.

Meanwhile, the user may move a portion on the user interface window at which a cursor or highlighting is placed, using left/right bottom of the input unit 190 or the remote controller 200. In the present exemplary embodiment, the portion at which the cursor or highlighting is placed is moved to a right direction, according to which the 'news' group presented on the left-most portion disappears and the 'sports' group is newly appeared on the right-most portion.

FIGS. 4A to 4D are views provided to explain an operation of adding the menu categorized according to different criteria of categorization, to the select menu generated according to the preset criteria of categorization in the zapping mode, according to an exemplary embodiment.

In one exemplary embodiment, the broadcast channels are categorized into a plurality of groups according to the genre information and the menu categorized according to the character information contained in the metadata is added to the select menu to select the respective groups.

FIG. 4A illustrates an example where the user selects the 'dramas' group from the user interface window 420 presenting therein the select menu 410 to select the movies, varieties, dramas, sports and education groups.

If the user selects a button provided on the input unit 190 or the remote controller 200 to set the criteria of categorization, or selects a menu (not illustrated) to directly set the criteria of categorization contained in the select menu 410, referring to FIG. 4B, the user interface window to select the information contained in the metadata appears on the OSD screen 430. Accordingly, the user can make selection based on the criteria of character 431, director 432, theme 433, place 434 and time 435 related to the program broadcast from the currently-tuned channel.

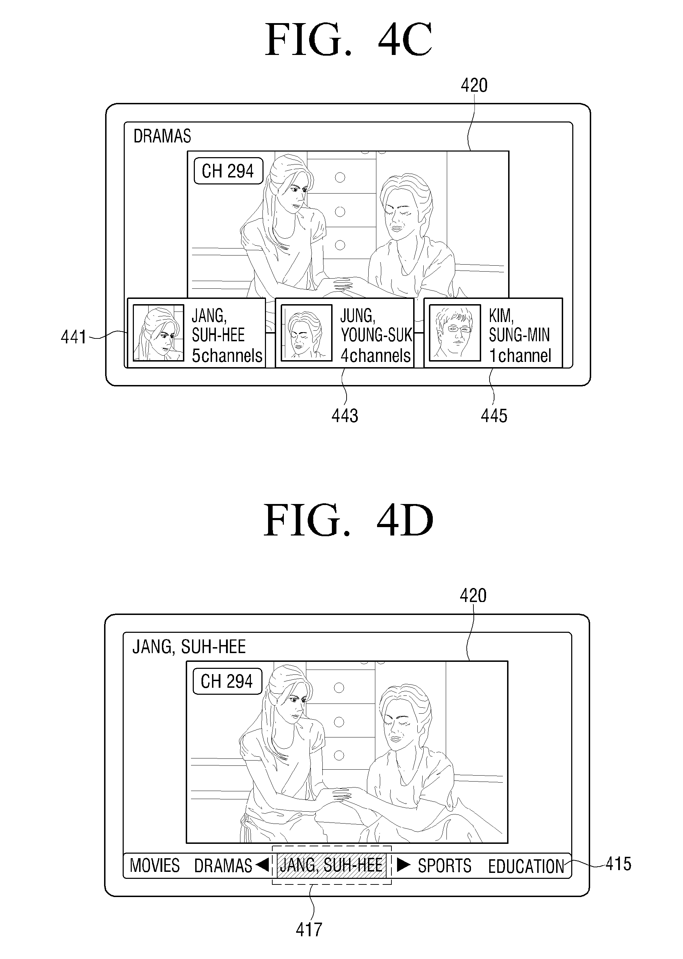

After that, it the user selects the character from the OSD screen 431 (FIG. 4B), the character information is extracted from the metadata contained in the currently-outputted broadcast program, and all the tunable programs are categorized according to the extracted character information. For example, if the character information extracted from the metadata contained in the currently-outputted broadcast program includes 'JANG, Suh-Hee', 'JUNG, Young-Suk' and 'KIM, Sung-Min', referring to FIG. 4C, all the tunable programs may be categorized under 'JANG, Suh-Hee', 'JUNG, Young-Suk' and 'KIM, Sung-Min' groups and displayed. In this example, menus 441, 443, 445 may be displayed, presenting information about the number of broadcast channels featuring the selected actors/actresses from among all the tunable channels.

Accordingly, it is indicated that 'JANG, Suh-Hee', 'JUNG, Young-Suk' and 'KIM, Sung-Min' are the actors/actresses appearing in the dramas, there are five channels broadcasting the programs featuring 'JANG, Suh-Hee' from among all the tunable programs, and that there are four and one channels that broadcast programs featuring 'JUNG, Young-Suk' and 'KIM, Sung-Min', respectively.

Meanwhile, if the user selects a specific actor/actress through the menus 441, 443, 445, the menu according to the groups corresponding to the selected actor/actress is added to the select menu generated according to the preset criteria of categorization. For example, if 'JANG, Suh-Hee' group is selected on the screen of FIG. 4C, the menu corresponding to the selected 'JANG, Suh-Hee' group may be added to the existing select menu 410 (FIG. 4A) which includes varieties, movies, dramas, sports and education. Accordingly, the select menu 415 added with the 'JANG, Suh-Hee' menu 417 is newly outputted as illustrated in FIG. 4D.

After that, if the user selects the 'JANG, Suh-Hee' group from the select menu 415 and inputs zapping command, only he programs featuring actress 'JANG, Sun-Hee' are tuned for view by the user.

Meanwhile, in the exemplary embodiment explained above, if the user selects 'character' on the OSD screen 431 (FIG. 4B), the character information is extracted from the metadata contained in the currently-outputted broadcast program, and all the tunable programs are categorized according to the extracted character information. However, this is written only for illustrative purposes. Accordingly, an alternative exemplary embodiment is possible. For example, if the user selects 'character' on the OSD screen 431 (FIG. 4B), the broadcast programs belonging to the currently-selected group may be categorized according to the extracted character information. That is, the broadcast programs of the 'dramas' group may be categorized into 'JANG, Suh-Hee', 'JUNG, Young-Suk' and 'KIM, Sung-Min' groups and displayed.

Meanwhile, in the above exemplary embodiment, the menus 441, 443, 445 of FIG. 4C include only the information regarding the number of broadcast channels featuring the selected actor/actress from among all the tunable channels. However, this is written only for illustrative purposes. Accordingly, the menus 441, 443, 445 may display the titles and designated channel numbers of the broadcast channels.

Meanwhile, in the above exemplary embodiments, although a method for tuning using the character as the criterion of categorization was explained above, this is written only for convenience of explanation. Accordingly, the same method is implementable in examples where the director, theme, place and time are used as the criteria of categorization.

Furthermore, although the groups categorized according to metadata are added to the previously-categorized select menu according to the genre information in the above exemplary embodiments, this is only written for illustrative purposes. Accordingly, other exemplary embodiments are possible. For example, groups categorized according to genre information may be added to the select menu that includes a plurality of groups previously categorized according to the metadata.

To be specific, if user command to enter zapping mode is inputted, the user interface window is outputted, including a select menu categorized using the metadata as the criterion of categorization, and the groups categorized according to the genre information may be added to the select menu according to the selection by the user. In this example, the user interface window may be presented as an OSD screen for the user to select the sub-items of the genre information as the criteria of categorization.

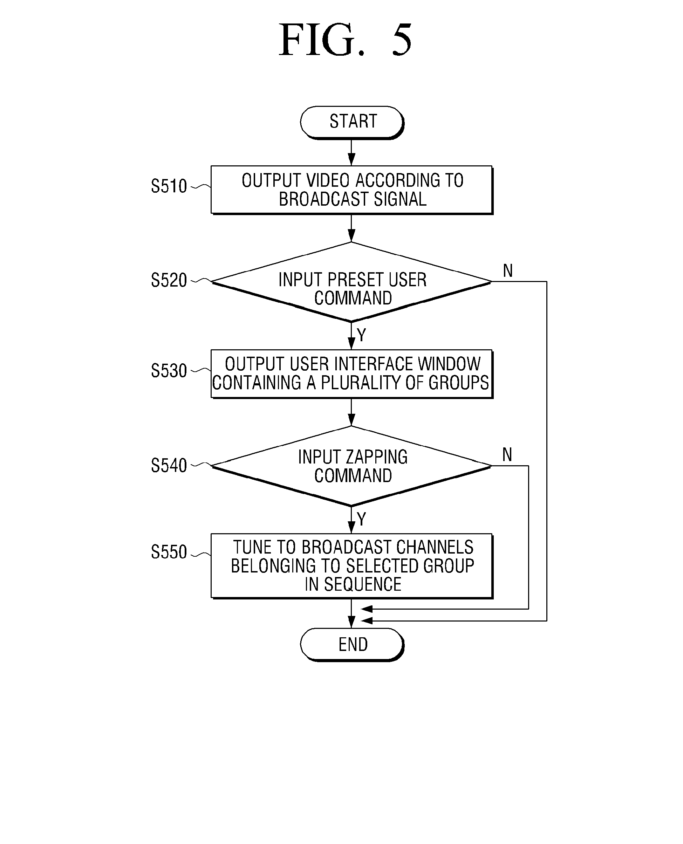

FIG. 5 is a flowchart provided to explain a method for displaying video according to an exemplary embodiment.

At S510, video is outputted according to a broadcast signal. Further, the broadcast channels corresponding to the received broadcast program are categorized into a plurality of groups based on the broadcast information or additional information. To be specific, the broadcast channels corresponding to the programs having the same broadcast information or additional information may be categorized under the same group.

After that, at S520-Y, if a preset user command is inputted, at S530, a user interface window including the plurality of groups having at least one broadcast channel is outputted. The 'preset user command' herein refers to a user command applied to enter zapping mode and thus output user interface window including a plurality of groups, and the 'zapping operation' herein may correspond to the user command repeated by the user for more than a predetermined number of times.

After that, at S540-Y, if one from among the plurality of groups is selected and a zapping command is inputted, the broadcast channels of the selected groups are tuned in sequence for reception of a broadcast signal.

In the above example, the genre information contained in the broadcast information may be set as the criteria of categorization to categorize a separate group. The 'genre' herein may include at least one of news, movies, dramas, varieties, sports, education, entertainments, and religion.

Further, at least one metadata may be extracted according to the selected criterion of categorization, and the channels related to the extracted metadata may be categorized under one group.

Meanwhile, at S530, the user interface window may be presented for the user to select at least one of character, theme, place and time related to the broadcast program corresponding to the broadcast channel selected by the user as the criterion of categorization.

Further, the user interface window may be presented, which provides information about the number of channels related to the extracted metadata.

Meanwhile, it is possible to set at least one of metadata, preference information and recommended channel information contained in the broadcast information as the criteria of categorization, and the groups may be categorized based on the set criteria of categorization. The 'metadata' herein may correspond to at least one information from among the character, theme, place and time related to the broadcast program corresponding to the broadcast channel selected by the user.

In the above example, the broadcast information may be received via a broadcast signal or an external server.

Accordingly, the user is enabled to view only the broadcast channels corresponding to the broadcast program having the same broadcast information or additional information in sequence.

The method explained above may be implemented by a broadcast receiving apparatus according to an exemplary embodiment, or alternatively, by other broadcast receiving apparatus which does not include any of the constituents of the broadcast receiving apparatus of the embodiment.

Further, in one exemplary embodiment, a computer-readable recording medium, storing therein a program to execute a method for displaying video, may be additionally provided. The computer-readable recording medium may encompass all types of recording devices to store data to be read by the computer system. For example, the computer-readable recording medium may include ROM, RAM, CD-ROM, magnetic tape, floppy disk, or optical data storage device, or alternatively, the computer-readable recording medium may be distributed over the computer systems connected via network to store and execute the code readable by the computer in a distributed manner.

The foregoing embodiments are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A broadcast receiving apparatus, comprising:
an output unit which outputs a user interface window containing a plurality of groups having at least one broadcast channel;
an input unit which receives a zapping command;
a receiving unit which is tuned to a broadcast channel and receives a broadcast signal;
and
a control unit which controls the receiving unit, if one from among the plurality of groups categorized according to at least one criterion of categorization is selected and the zapping command is inputted, so that the receiving unit is tuned to the broadcast channels belonging to the selected group in sequence.

2. The broadcast receiving apparatus of claim 1, wherein the control unit sets genre information contained in broadcast information as the criterion of categorization and categorizes a separate group.

3. The broadcast receiving apparatus of claim 2, wherein the genre comprises at least one of news, movies, dramas, varieties, sports, education, entertainments, and religion.

4. The broadcast receiving apparatus of claim 2 or 3, wherein the control unit controls so that a user interface window is displayed to select the criterion of categorization based on at least one of character, theme, place and time of a broadcast program corresponding to a broadcast channel selected by a user.

5. The broadcast receiving apparatus of claim 4, wherein the control unit extracts at least one metadata corresponding to the selected criterion of categorization and categorizes channels related to the extracted metadata under one group.

6. The broadcast receiving apparatus of claim 5, wherein the control unit controls so that a user interface window containing information about a number of the channels related to the extracted metadata is displayed.

7. The broadcast receiving apparatus in anyone of claim 1 to 6, wherein the control unit sets the criterion of categorization based on at least one of metadata, preference information and recommended channel information contained in broadcast information, and categorizes a separate group based on the set criterion of categorization.

8. The broadcast receiving apparatus of claim 7, wherein the metadata is information related to at least one of character, theme, place and time related to a broadcast program corresponding to a broadcast channel selected by a user.

9. The broadcast receiving apparatus of claim 2, wherein the broadcast information is received via a broadcast signal or an external server.

10. The broadcast receiving apparatus in anyone of claim 1 to 9, wherein the control unit controls the output unit, if the zapping command is consecutively inputted for more than a preset number of times, so that the output unit outputs the user interface window.

11. A method for displaying video, comprising:
outputting a user interface window containing a plurality of groups having at least one broadcast channel;
receiving a zapping command; and
if one from among the plurality of groups categorized according to at least one criterion of categorization is selected and the zapping command is inputted, tuning to the broadcast channels belonging to the selected group in sequence.

12. The method of claim 11, further comprising setting genre information contained in broadcast information as the criterion of categorization and categorizing a separate group.

13. The method of claim 12, wherein the genre comprises at least one of news, movies, dramas, varieties, sports, education, entertainments, and religion.

14. The method of claim 12, wherein the outputting comprises displaying a user interface window to select the criterion of categorization based on at least one of character, theme, place and time of a broadcast program corresponding to a broadcast channel selected by a user.

15. The method of claim 14, wherein the categorizing comprises extracting at least one metadata corresponding to the selected criterion of categorization and categorizing channels related to the extracted metadata under one group.
